# EUROPEAN PATENT SPECIFICATION

(11) **EP 2 763 453 B1**
(45) Date of publication and mention of the grant of the patent: **18.01.2017**
(21) Application number: 12786023.7
(22) Date of filing: 13.04.2012
(51) Int. Cl.: H04W 24/10

(54) **METHOD FOR TRANSMITTING MINIMIZATION OF DRIVE TEST RELATED INFORMATION AND WIRELESS ACCESS NETWORK**
VERFAHREN ZUR ÜBERTRAGUNG VON AUF MINIMIERUNG VON MESSFAHREN BEZOGENEN INFORMATIONEN SOWIE DRAHTLOSES ZUGANGSNETZWERK
PROCÉDÉ DE TRANSMISSION D'INFORMATIONS RELATIVES À LA MINIMISATION DE TESTS DE TRACAGE ET RÉSEAU D'ACCÈS SANS FIL

(30) Priority: 29.09.2011 CN 201110300343
(43) Date of publication of application: 06.08.2014
(73) Proprietor: ZTE Corporation, Shenzhen, Guangdong 518057 (CN)
(72) Inventor: HE, Feng, Shenzhen, Guangdong 518057 (CN)
(74) Representative: D'Halleweyn, Nele Veerle Trees Gertrudis
(86) International application number: PCT/CN2012/073997
(87) International publication number: WO 2012/155731

(56) References cited:
- CN-A- 102 083 130
- CN-A- 102 098 721
- CN-A- 102 202 284
- US-A1- 2011 159 891
- US-A1- 2011 195 668
- NOKIA SIEMENS NETWORKS: "Introduce explicit PLMN list for MDT", 3GPP DRAFT; R3-112191, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Athens, Greece; 20110822, 9 September 2011 (2011-09-09), XP050541815, [retrieved on 2011-09-09]
- HUAWEI: "Add Clarification for MDT continuation in EPLMN Scenario", 3GPP DRAFT; S5-112443 CR 32.422 R10 ADD CLARIFICATION FOR MDT CONTINUATION IN EPLMN SCENARIO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. Istanbul, Turkey; 20110822, 14 August 2011 (2011-08-14), XP050551355, [retrieved on 2011-08-14]
- LG ELECTRONICS INC: "Continuation of MDT at EPLMN", 3GPP DRAFT; R2-113900 CONTINUATION OF MDT AT EPLMN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20110822, 16 August 2011 (2011-08-16), XP050539879, [retrieved on 2011-08-16]

## Description

### Technical Field

The present invention relates to the field of communications, and in particular, to a method for transmitting Minimization of Drive Test (MDT) related information in a mobile communication system and a radio access network.

### Background of the Related Art

With the development of wireless technologies and the popularity of wireless communications, wireless networks using different techniques coexist, the coverage thereof is becoming larger and larger, and for operators, the networks and devices needed to be managed are also more and more and are increasingly complex. For network operation and maintenance, operators need to pay a lot of human and material resources to enable manual drive test, and the efficiency is very low. In order to improve the situation, the Third Generation Partnership Projects (3GPP) begins to introduce the MDT function in networks such as Universal Terrestrial Radio Access Network (UTRAN) (including the Node B and the Radio Network Controller (RNC)) and Evolved Universal Terrestrial Radio Access Network (E-UTRAN) (including the evolved NodeB (eNB)) systems.

The MDT function utilizes a User Equipment (UE) which is referred to a terminal to automatically collect measurement information and report the measurement information to a Radio Access Network (RAN), which corresponds to a Radio Network System (RNS) in the UTRAN system and the eNB in the E-UTRAN system respectively, through control plane signaling, and then report the measurement information to a Trace Collection Entity (TCE) over the RAN, so as to perform network optimization, for example, finding and solving network coverage problems.

The MDT supports two modes, i.e., management based MDT and signaling based MDT.

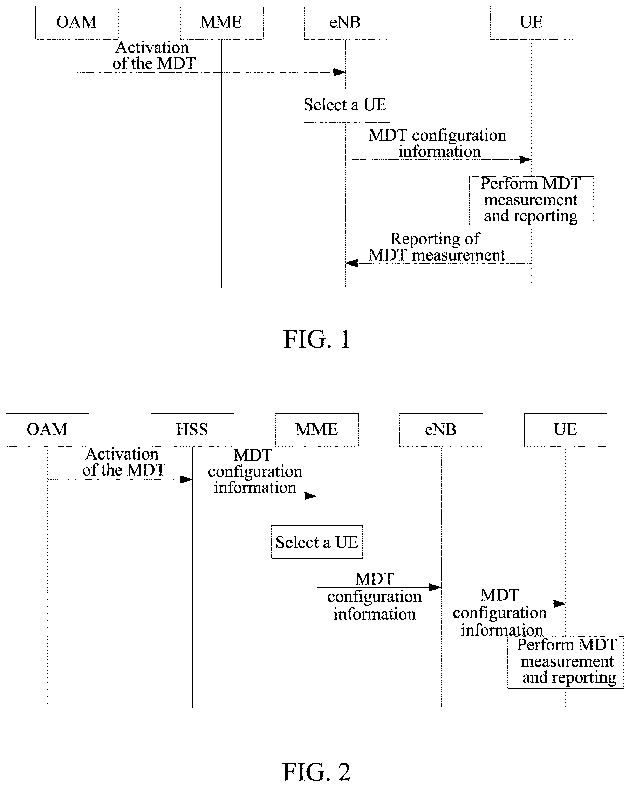

A process of activating the management based MDT (taking the E-UTRAN system as an example, the following is the same) is that a network management element, such as an Operation Administration Maintenance (OAM) or an Element Manager (EM), transmits a trace session activation message including the MDT configuration to the eNB to activate MDT measurements of some UEs, and the eNB selects a suitable UE according to the received configuration information, and transmits the MDT configuration information to the selected UE, and the UE performs corresponding MDT measurement and reporting according to the configuration information, as shown in Fig. 1.

A processing of activating the signaling based MDT is that the network management element transmits a trace session activation message including an MDT configuration to an HSS to active a certain MDT measurement, and the HSS transmits the MDT configuration information to the MME, then the MME selects a UE according to the configuration information, and transmits the configuration information to the UE via an eNB, and the UE performs corresponding MDT measurement and reporting according to the configuration information, as shown in Fig. 2.

The modes of the MDT may further be divided into logged MDT and immediate MDT according to a state of the UE when the UE performs the MDT measurement, wherein,
the logged MDT refers to that the UE performs measurement recording in an idle state of the Radio Resource Control (RRC). For the E-UTRAN system, the idle state refers to RRC_IDLE state; and for the UTRAN system, the idle state further includes a Cell_Paging Channel state (CELL_PCH) and UTRAN Registration Area Paging Channel state (URA_PCH).

The immediate MDT refers to that the UE performs measurement reporting in a RRC connected state. For the E_UTRAN system, the RRC connected state refers to a RRC_CONNECTED state, and for the UTRAN system, the RRC connected state refers to a Cell Dedicated Channel state (CELL_DCH).

Wherein, the MDT configuration information includes an Area scope (for example, information about scopes designated based on a Track Area (TA), a Location Area (LA), a Route Area (RA), or a Cell etc.), a Trace Reference, a type of measurement needed to be performed by the UE, and an IP address of the TCE etc.

It should be illustrated that, for a single UE, the UE may reside in multiple networks. A list of Public Land Mobile Networks (PLMNs) supported by the UE is referred to as an Equivalent PLMN list (EPLMN list), which may be appointed through the subscription information. These networks are equivalent when the UE performs cell selection and reselection, PLMN selection, and mobility or handover in these networks. A PLMN which is the same PLMN constituted by a Mobile Country Code (MCC) and a Mobile Network Code (MNC) in an International Mobile Subscriber Identity (IMSI) of the UE is referred to as a Home PLMN (Home PLMN) of the UE. Although the UE may reside in or establish a connection in multiple networks, since the reported information of the MDT may carry private information of the UE, in order to ensure Privacy of the UE, a current protocol only allows selecting a UE of which a current serving network is a home network to perform MDT measurement. That is, only when the current Registered PLMN (PLMN) of the UE which is also referred to as a Serving PLMN is the home PLMN of the UE, the UE is selected to perform MDT. The PLMN is also referred to as an MDT PLMN. That is, only when the UE is in a network of the MDT PLMN, the UE is allowed to be selected to perform MDT. If the UE leaves a network corresponding to the PLMN which issues the configuration (i.e., the MDT PLMN), the MDT measurement will be suspended or deleted.

Since considering the capability of a user terminal (i.e., a UE) and other subscription requirements of a user, not every UE can support the MDT measurement and reporting, each UE has its own User Consent to indicate whether the UE supports MDT, and the user can change his/her user consent at any time. For the signaling based MDT, the selection for the UE is implemented by the core network; since the Core Network (CN) knows the information of the above UE, the CN can select a correct UE; but for the management based MDT, the selection for the UE is implemented at the RAN side (i.e., the eNB or the RNC). In order to assist the RAN in selecting a suitable UE, the CN will transmit the user consent information of the UE to the RAN in a form of Management Based MDT Allowed. If the information indicates allowance, it is indicated that the UE supports the MDT, and therefore it can be selected to perform the management based MDT, and if the information indicates disallowance, the UE cannot be selected to perform the management based MDT. However, only when the UE registers in its own home network (i.e., a network corresponding to the HPLMN), the core network will transmit user consent information to the RAN; otherwise, the core network will not transmit the information, and the UE cannot be selected to perform the MDT measurement and reporting at this time. This information will be transferred to a new cell together with context information of the UE when the UE is moving (for example, performing handover or cell relocation). However, if the serving PLMN changes after the UE moves from a source cell to a target cell, the user consent information of the UE at the source side, i.e., the management based MDT allowed information, will not be transferred to the target cell, since the information is only valid under the PLMN of the source cell.

As described above, the existing protocol only considers MDT measurement of the UE in one network. While in practical network deployment, the same operator may simultaneously operate many networks, which may have different PLMN identities respectively, and various networks may be networks using the same Radio Access Technology (RAT) or different RATs (for example, 2G, 3G networks etc.). In such scenario, the operator hopes that the UE can perform MDT measurement and reporting in many PLMNs, i.e., many networks in a designated allowed PLMN list. Only the UE in the network corresponding to the PLMN in the allowed PLMN list can be selected to perform MDT. However, if handover (or cell relocation) among many networks in the designated allowed PLMN list occurs to the UE, the user consent information of the UE will not be transferred according to the existing protocols. Therefore, after the UE moves to a new network, the UE may not be selected to perform MDT measurement due to lack of user consent information.

In the non-patent document NOKIA SIEMENS NETWORKS: "Introduce explicit PLMN list for MDT", 3GPP DRAFT; R3-112191, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX ; FRANCE, vol. RAN WG3, Athens, Greece; 9 September 2011, it provides explicit PLMN list for MDT in which a new MDT PLMN List IE is defined and included in the MDT Configuration IE in order to be passed to the target eNB during Handover Preparation.

In the non-patent document HUAWEI: "Add Clarification for MDT continuation in EPLMN Scenario", 3GPP DRAFT; S5-112443 CR 32.422 R10 ADD CLARIFICATION FOR MDT CONTINUATION IN EPLMN SCENARIO, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX ; FRANCE, vol. SA WG5, Istanbul, Turkey; 14 August 2011, it provides to add clarification to the description of MDT continuation in EPLMN scenario, in which handling of MDT trace sessions at handover for immediate MD, and handling of MDT trace sessions at handover for Logged MDT are described.

### Summary of the Invention

The technical problem to be solved by the present invention is to provide a method for transmitting MDT related information and a radio access network, so as to solve the problem that the access network cannot select a UE to perform an MDT measurement for lack of user consent scope indication information in multiple PLMN scenarios.

The features of the method and the radio access network according to the present invention are defined in the independent claims, and the preferable features according to the present invention are defined in the dependent claims.

In order to solve the above technical problems, the present invention uses the following technical solutions:
A method for transmitting MDT related information, comprising:
   in a process of a handover or relocation of a UE, when a source RAN judges that a serving PLMN for a target RAN belongs to PLMNs indicated by user consent scope indication information of the UE, the source RAN directly transmitting the user consent scope indication information of the UE to the target RAN, or transmitting the user consent scope indication information of the UE to the target RAN over a core network, wherein, the user consent scope indication information of the UE is used for indicating the PLMNs of which the UE supports the MDT measurement.

The method further comprises:
before the source RAN performs the judgment, the core network transmitting the user consent scope indication information of the UE to the source RAN.

The method further comprises:
before the core network transmits the user consent scope indication information of the UE to the source RAN, the core network judging whether a current serving PLMN of the UE belongs to the PLMNs indicated by the user consent scope indication information of the UE, and if so, transmitting the user consent scope indication information of the UE to the RAN of the UE.

The method further comprises:
the source RAN transmitting the user consent scope indication information of the UE to the target RAN while transmitting management based MDT allowed indication information to the target RAN, wherein, when a content of the management based MDT allowed indication information indicates allowance, a content of the user consent scope indication information is PLMNs of which the UE supports the MDT measurement, and when the content of the management based MDT allowed indication information indicates disallowance, the content of the user consent scope indication information is PLMNs of which the UE does not support the MDT measurement.

Wherein, the step of the source RAN transmitting the user consent scope indication information of the UE to the target RAN over a core network comprises:
the source RAN transmitting a handover request or a relocation request carrying the user consent scope indication information of the UE to the core network, and after receiving the handover request or the relocation request, the core network transmitting a message carrying the user consent scope indication information of the UE to the target RAN.

Wherein, the user consent scope indication information includes one or more pieces of PLMN information, the PLMN information is PLMN identity, PLMN index or bitmap information.

The method further comprises:
when the source RAN or the target RAN selects a UE for the MDT, selecting a UE of which a current serving PLMN simultaneously belongs to PLMNs indicated by the user consent scope indication information of the UE and an allowed PLMN list, or selecting a UE of which the PLMNs indicated by the user consent scope indication information are intersected with the allowed PLMN list.

A RAN for transmitting MDT related information, comprising a judgment module and a transmission module when the RAN is used as a source RAN, wherein,
the judgment module is configured to judge whether a serving PLMN for a target RAN belongs to PLMNs indicated by user consent scope indication information of a UE in the process of a handover or relocation of the UE, wherein, the user consent scope indication information of the UE is used for indicating PLMNs of which the UE supports the MDT measurement; and
the transmission module is configured to directly transmit the user consent scope indication information of the UE to the target RAN or transmit the user consent scope indication information of the UE to the target RAN over a core network when the judgment module judges that the serving PLMN for the target RAN belongs to the PLMNs indicated by the user consent scope indication information of the UE.

Wherein, the transmission module is further configured to:
directly transmit the user consent scope indication information of the UE to the target RAN, or transmit the user consent scope indication information of the UE to the target RAN over the core network while transmitting management based MDT allowed indication information to the target RAN, wherein, when a content of the management based MDT allowed indication information indicates allowance, a content of the user consent scope indication information is PLMNs of which the UE supports the MDT measurement, and when the content of the management based MDT allowed indication information indicates disallowance, the content of the user consent scope indication information is PLMNs of which the UE does not support the MDT measurement.

Wherein, the transmission module is configured to transmit the user consent scope indication information of the UE to the target RAN over the core network by means of:
the transmission module transmitting a handover request or a relocation request carrying the user consent scope indication information of the UE to the core network, and the core network transmitting a message carrying the user consent scope indication information of the UE to the target RAN.

Wherein, the user consent scope indication information includes one or more pieces of PLMN information, the PLMN information is PLMN identity, PLMN index or bitmap information.

The RAN further comprises a selection module, wherein,
the selection module is configured to when the RAN used as a source RAN or a target RAN selects a UE for the MDT, select a UE of which a current serving PLMN simultaneously belongs to PLMNs indicated by the user consent scope indication information of the UE and an allowed PLMN list, or select a UE of which the PLMNs indicated by the user consent scope indication information are intersected with the allowed PLMN list.

The method proposed according to the embodiments of the present invention not only solves the problem that the access network acquires user consent scope indication information to complete the selection of the UE in multiple PLMN scenarios, but also the user consent scope indication information will not be transferred for a network without user consent. Therefore, the present invention ensures both the security of the user consent scope indication information and the security of the user privacy.

### Brief Description of Drawings

Fig. 1 is a diagram of a management based MDT process;
Fig. 2 is a diagram of a signaling based MDT process;
Fig. 3 is a flowchart according to an embodiment of the present invention;
Fig. 4 is a structural diagram of a RAN for implementing the method in Fig. 3;
Fig. 5 is a flowchart of a method according to embodiment one of the present invention;
Fig. 6 is a flowchart of a method according to embodiment two of the present invention; and
Fig. 7 is a flowchart of a method according to embodiment three of the present invention.

### Preferred Embodiments of the Invention

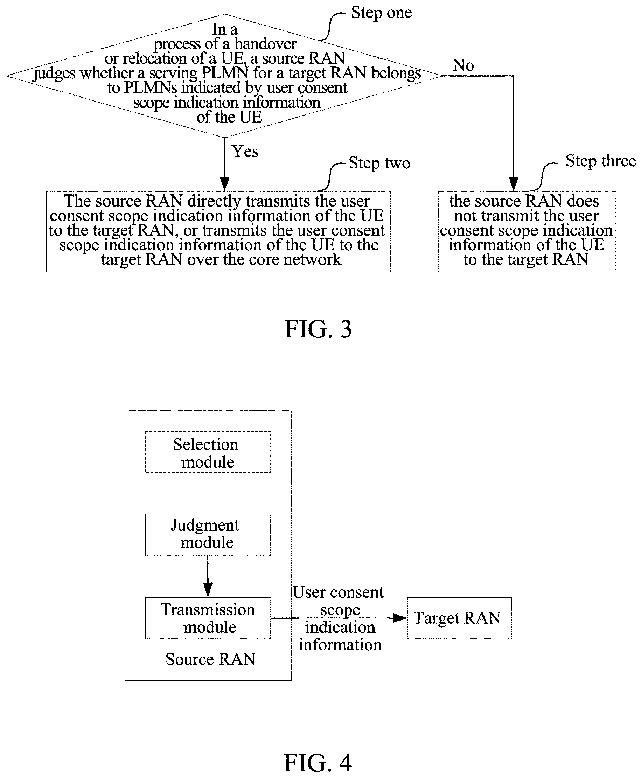

The embodiment of the present invention provides a method for selecting a user during MDT, i.e., a method for maintaining user consent information. As shown in Fig. 3, the method includes the following steps:
In step one, in a process of a handover or relocation of a UE, a source RAN judges whether a serving PLMN for a target RAN belongs to PLMNs indicated by user consent scope indication information of the UE, and if so, it is to perform step two; otherwise, it is to perform step three;
the user consent scope indication information of the UE is used for indicating the PLMNs of which the UEs support the MDT measurement.

The user consent scope indication information of the UE on the source RAN is transmitted by the core network or other RANs (when the local RAN is used as a target RAN of other RANs, the user consent scope indication information is transmitted by other RANs). If it is transmitted by the core network, optionally, the core network may perform the following judgment before transmitting the user consent scope indication information of the terminal to the RAN: if the core network judges that the current serving PLMN of the UE belongs to the PLMNs indicated by the user consent scope indication information of the UE, transmitting the user consent scope indication information of the UE to the RAN of the UE. That is, when the current serving PLMN of the UE allows the management based MDT measurement, the user consent scope indication information of the UE is transmitted to the UE.

The above user consent scope indication information may include one or more pieces of PLMN information, the PLMN information is PLMN identity, PLMN index or bitmap information. The RAN may acquire specific PLMN identity information according to the index or bitmap information. Alternatively, the index or bitmap information of the PLMN may be index or bitmap information for an equivalent PLMN list of the UE, or may also be a list of all PLMNs supported by the RAN, and the RAN can index or find a corresponding PLMN identity according to the list.

Alternatively, the user consent scope indication information of the UE may indicate PLMNs of which the UEs support the MDT measurement by using an exclusive method. For example, the content of the user consent scope indication information is information about PLMNs without user consent. Specifically, the PLMN information may be specified by using an explicitly designated identity or by means of an index or bitmap, and which one of the two equivalent indicating ways will be used may be decided according to a specific implementation.

Alternatively, the user consent scope indication information may be used together with the Management based MDT allowed indication information. If the management based MDT allowed indication information indicates allowance, the content of the user consent scope indication information may be PLMNs of which the UEs support the MDT measurement, and if the management based MDT allowed indication information indicates disallowance, the content of the user consent scope indication information may be PLMNs of which the UEs do not support the MDT measurement.

In step two, the source RAN directly transmits the user consent scope indication information of the UE to the target RAN, or transmits the user consent scope indication information of the UE to the target RAN over the core network.

The above step of the source RAN transmitting the user consent scope indication information of the UE to the target RAN over a core network comprises: the source RAN transmitting a handover request or a relocation request carrying the user consent scope indication information of the UE to the core network, and after receiving the handover request or the relocation request, the core network transmitting a message carrying the user consent scope indication information of the UE to the target RAN.

In step three, the source RAN does not transmit the user consent scope indication information of the UE to the target RAN.

In any time in the above steps, when the source RAN or the target RAN needs to select a UE for the MDT, the UE is selected by the following way: selecting a UE of which a current serving PLMN simultaneously belongs to PLMNs indicated by the user consent scope indication information of the UE and an allowed PLMN list, or selecting a UE of which the PLMNs indicated by the user consent scope indication information are intersected with the allowed PLMN list.

The source RAN for implementing the above method, as shown in Fig. 4, includes a judgment module and a transmission module, wherein,
the judgment module is configured to judge whether a serving PLMN for a target RAN belongs to PLMNs indicated by user consent scope indication information of a UE in the process of the handover or relocation of the UE, wherein, the user consent scope indication information of the UE is used for indicating PLMNs of which the UEs support the MDT measurement; and
the transmission module is configured to directly transmit the user consent scope indication information of the UE to the target RAN or transmit the user consent scope indication information of the UE to the target RAN over a core network when the judgment module judges that the serving PLMN for the target RAN belongs to the PLMNs indicated by the user consent scope indication information of the UE.

Alternatively, the above transmission module is further configured to: directly transmit the user consent scope indication information of the UE to the target RAN, or transmit the user consent scope indication information of the UE to the target RAN over the core network while transmitting management based MDT allowed indication information to the target RAN, wherein, when the content of the management based MDT allowed indication information indicates allowance, the content of the user consent scope indication information is PLMNs of which the UEs support the MDT measurement, and when the content of the management based MDT allowed indication information indicates disallowance, the content of the user consent scope indication information is PLMNs of which the UEs do not supporting the MDT measurement.

Alternatively, the above transmission module is configured to transmit the user consent scope indication information of the UE to the target RAN over the core network by the following way:
the transmission module transmitting a handover request or a relocation request carrying the user consent scope indication information of the UE to the core network, and the core network transmitting a message carrying the user consent scope indication information of the UE to the target RAN.

The above user consent scope indication information includes one or more pieces of PLMN information, the PLMN information is PLMN identity, PLMN index or bitmap information.

Alternatively, the above RAN further comprises a selection module, configured to, when the RAN is used as a source RAN or a target RAN to select a UE for the MDT, select a UE of which a current serving PLMN simultaneously belongs to PLMNs indicated by the user consent scope indication information of the UE and an allowed PLMN list, or select a UE of which the PLMNs indicated by the user consent scope indication information are intersected with the allowed PLMN list.

In order to make the purpose, technical schemes and advantages of the present invention more clear and apparent, the embodiments of the present invention will be further illustrated in detail hereinafter in conjunction with accompanying drawings. It should be illustrated that, in the case of no conflict, the embodiments of this application and the features in the embodiments could be combined randomly with each other. These combinations all fall into the protection scope of the present invention.

### Embodiment one

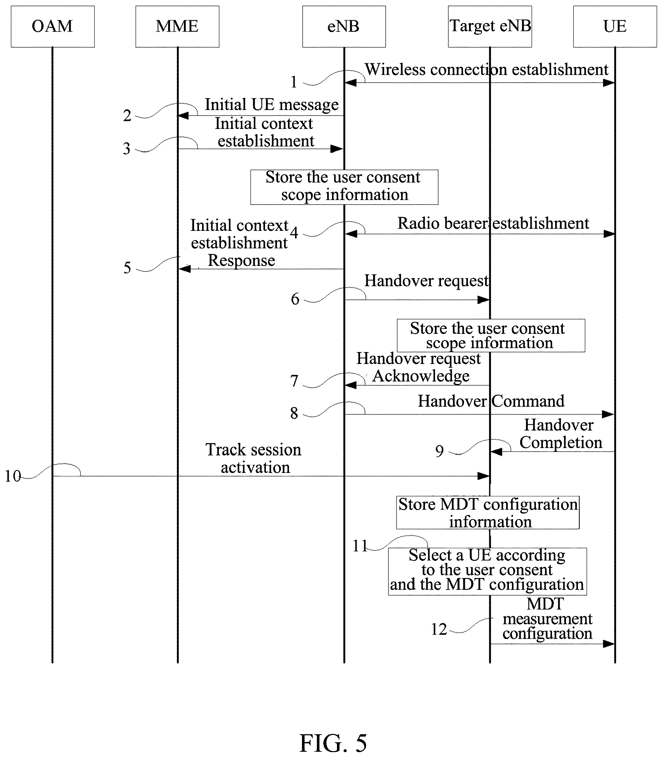

The present embodiment implements a method for processing user consent information in a LTE network, and as shown in Fig. 5, the method includes the following steps.

In step one, the UE initiates a process of establishing a Radio Resource Control (RRC) connection in cell a under an eNB, to implement establishment of a wireless connection, wherein, a current serving PLMN of the UE (i.e., a serving PLMN or referred to as a RPLMN) is PLMN1;
in step two, the eNB transmits an Initial UE Message to an MME;
in step three, the MME transmits an Initial UE Context Setup Request message to the eNB, wherein, the initial UE context setup request message carries Management based MDT Allowed indication which indicates allowance, and further carries user consent scope indication information of the UE including information about a list of PLMNs of which the UEs support the MDT measurement; and after receiving the initial UE context setup request message, the eNB stores the user consent scope indication information of the UE.

Alternatively, the user consent scope indication information transmitted by the MME may also be PLMN index or bitmap information of PLMNs possessing user consent, an object of the index or bitmap may be an equivalent PLMN list of the UE, or may also be a list of all PLMNs supported by the eNB; and the eNB can find corresponding PLMN identity information according to the index or bitmap.

For example, the PLMNs indicated by the user consent scope indication information include PLMN1, PLMN2, and PLMN3.

In the present embodiment, the user consent scope indication information is used together with the management based MDT allowed indication information. In other embodiments, the user consent scope indication information may also be used alone, i.e., the management based MDT measurement is allowed by default in the network designated by the user consent scope, and at this time, the management based MDT allowed indication may be default.

In step four, the eNB initiates a process of RRC connection reconfiguration to the UE, to complete the establishment of a radio bearer;
in step five, the eNB transmits an Initial UE message Response message to the MME, to complete a context establishment of the UE;
in step six, the eNB decides to hand the UE over to an adjacent target cell b according to the reporting of the measurement of the UE, wherein, a serving PLMN of the UE in the target cell b is PLMN2; and if the eNB judges that the serving PLMN of the target cell b belongs to the PLMNs indicated by the user consent scope indication information of the UE, the eNB transmits a Handover Request message carrying the user consent scope indication information to the target eNB where cell b is located, wherein, the handover request message further carries the management based MDT allowed indication information;

In step seven, after the target eNB receives the handover request message, the target eNB stores context information of the UE including the user consent scope indication information and the management based MDT allowed indication information; and if the resources are allocated to the UE successfully, the target eNB transmits a Handover Request Acknowledge message to the original eNB, i.e., the source eNB;
in step eight, the source eNB transmits a Handover Command message to the UE to indicate the UE to hand over to the target eNB;
in step nine, the UE transmits a Handover Complete message to the target eNB to indicate that the handover is completed successfully;

In step ten, a network management element (for example, an OAM or an EM) transmits a track session activation message carrying the MDT configuration information to the eNB to activate the management based MDT, wherein, the MDT configuration information may include a type of MDT measurement needed to be performed, a measurement timing, a measurement period, a measurement trace reference, measurement area scope information etc., and may further include an allowed PLMN list information of the MDT measurement (for example, the list includes PLMN1 and PLMN2), and the MDT measurement can only be performed when in a network corresponding to the PLMN of the list. After receiving the track session activation message, the eNB will store the MDT configuration information.

The present step is a step of the network management element activating the management based MDT, and the present step is not limited to be performed at this time, and may also be performed at any time before or after the UE establishes the connection. The Specific performance time is not limited.

In step eleven, the eNB selects the UE according to the MDT configuration, the management based MDT allowed indication and the user consent scope indication information of the UE, so as to perform the management based MDT. If the PLMNs indicated by the user consent scope indication information of the UE are intersected with an MDT allowed PLMN list, the eNB may select the UE to perform MDT measurement and reporting.

Alternatively, in the above step eleven, the eNB may also judge according to the current serving PLMN (i.e., RPLMN) of the UE when selecting the UE. The UE is selected to perform MDT measurement and reporting only if the serving PLMN of the UE is in the allowed PLMN list and is in the PLMNs indicated by the user consent scope indication information simultaneously. In a specific implementation, the eNB may decide a way of selecting the UE according to a mode of the MDT measurement and specific requirements of the operators.

In step twelve, the eNB transmits an MDT measurement configuration to the UE; and the UE performs MDT measurement and reporting according to the configuration information.

If the UE hands over again at the target eNB and if the new target serving PLMN of the UE is within the user consent scope of the UE, it needs to transfer the user consent scope indication information of the UE; otherwise, the user consent scope indication information will not be transferred.

The above method for processing the user consent scope is also applicable for the 3G system.

### Embodiment two

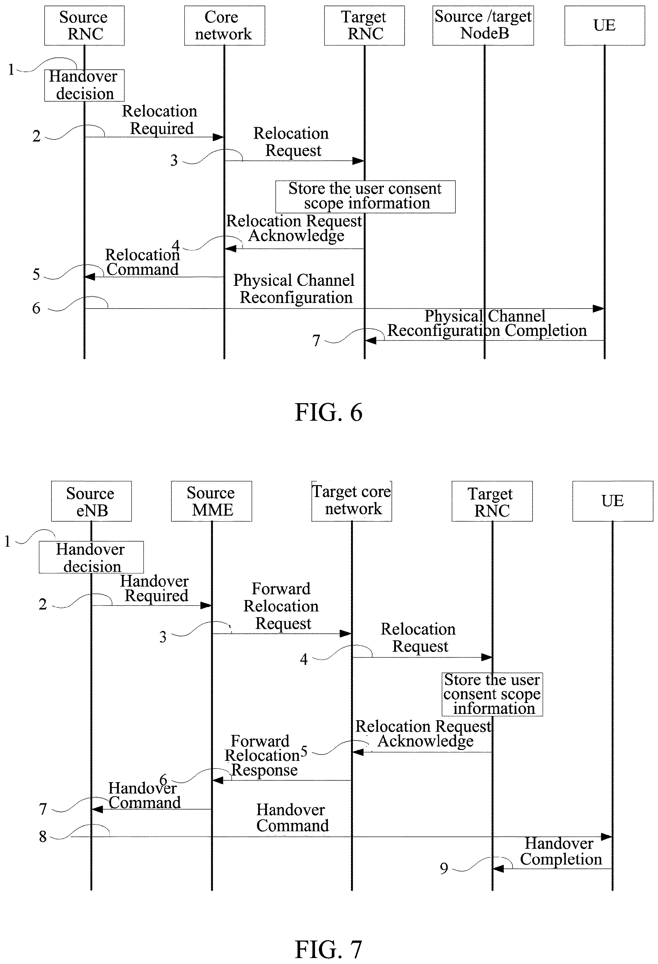

The present embodiment implements a method for processing user consent information during a handover (or relocation) in a network, and taking UTRAN as an example and as shown in Fig. 6, the method includes the following steps.

In step one, for a UE which is in a normal connected state in cell a of the UTRAN, a serving PLMN is PLMN1, and a user consent scope of the UE includes PLMN1 and PLMN2. The RNC performs a handover decision through the reporting of measurement of the UE or other factors (such as overload), to decide to hand the UE over into cell b of the UTRAN, wherein, the serving PLMN of the UE in cell b is changed to PLMN2 and is in the user consent scope.

In step two, if the source RNC judges that the serving PLMN of the target cell b belongs to the PLMNs indicated by the user consent scope indication information of the UE, the eNB transmits a Relocation Required message to the core network, wherein, a Source RNC to Target RNC Transparent Container in the message caries the management based MDT allowed indication information and user consent scope indication information;
if the serving PLMN (such as PLMN3) of the target cell b is not in the user consent scope, the source RNC does not carry the user consent scope indication information in the relocation required message.

The user consent scope indication information of the UE on the source RAN is transmitted by the core network.

In the present embodiment, the user consent scope indication information is used together with the management based MDT allowed indication information. In other embodiments, the user consent scope indication information may also be used alone, i.e., the management based MDT measurement is allowed by default in the network designated by the user consent scope, and at this time, the management based MDT allowed indication may be default.

Alternatively, the user consent scope indication information transmitted by the MME may also be PLMN index or bitmap information of PLMNs with user consent, an object of the index or bitmap may be an equivalent PLMN list of the UE, or may also be a list of all PLMNs supported by the eNB; the eNB can find corresponding PLMN identity information according to the index or bitmap.

In other embodiments, the above user consent scope indication information may indicate, for example, for the core network, which PLMNs do not have user consent by using an exclusive method. Specifically, the above user consent scope indication information may also specify the PLMNs by using an explicitly designated identity or by means of an index or bitmap. Which way to use may be decided according to a specific implementation.

In step three, the core network transmits a Relocation Request message to the target RNC, wherein, the relocation request message carries the management based MDT allowed indication information and user consent scope indication information;

In step four, the target RNC stores the context information of the UE, wherein, the context information includes the management based MDT allowed indication information and the user consent scope indication information, and after the sources are allocated to the UE successfully, the target RNC replies to the core network with a Relocation Request Acknowledge message;
in step five, the core network transmits a Relocation command message to the source RNC;
in step six, the source RNC transmits a Physical Channel Reconfiguration message to the UE to indicate the UE to hand over to the target RNC;
in step seven, the UE transmits a Physical Channel Reconfiguration Complete message to the target RNC to complete the handover;
if the current RNC activates the management based MDT, the target RNC may select the UE according to the user consent scope indication information and the MDT measurement configuration, and configure the UE to perform the measurement;
the selection method when the RNC selects the UE may be that:
if the PLMNs indicated by the user consent scope indication information of the UE are intersected with an MDT allowed PLMN list, the RNC may select the UE to perform MDT measurement and reporting.

Alternatively, the RNC may also judge according to the current serving PLMN (i.e., RPLMN) of the UE. The UE is selected to perform MDT measurement and reporting only if the serving PLMN of the UE is in the allowed PLMN list and the PLMN list indicated by the user consent scope indication information simultaneously. In a specific implementation, the RNC may decide a way of selecting the UE according to a mode of the MDT measurement and specific requirements of the operators.

If the UE hands over again at the target RNC and if the new target serving PLMN of the UE is within the user consent scope of the UE, it needs to transfer the user consent scope indication information of the UE; otherwise, the user consent scope indication information will not be transferred.

### Embodiment three

The present embodiment implements a method for processing user consent information during handover (or relocation) in a network, and taking an EUTRAN to UTRAN inter-RAT handover as an example, as shown in Fig. 7, the method includes the following steps.

In step one, for a UE which is in a normal connected state in cell a of the LTE, a serving PLMN is PLMN1, and a user consent scope of the UE includes PLMN1, PLMN2 and PLMN3. The eNB performs a handover decision through the measurement reporting of the UE or other factors (such as overload), to decide to hand the UE over into cell b of the UTRAN, wherein, the serving PLMN of the UE in cell b is changed to PLMN2 and is in the user consent scope;
in step two, if the eNB judges that the serving PLMN of the target cell b belongs to the PLMNs indicated by the user consent scope indication information of the UE, the eNB transmits a Handover Required message to the MME, wherein, a source to target Transparent Container in the message carries the user consent scope indication information of the UE;

In the present embodiment, the user consent scope indication information is used alone. In other embodiments, the user consent scope indication information may also be used together with the management based MDT allowed indication information. At this time, the management based MDT allowed indication information is also needed to be transferred when the user consent scope indication information is transferred in the above steps.

In step three, the MME transmits a Forward Relocation Request message to the core network of the target RNC, to transfer the information of the source to target transparent container in the message of the eNB to the target core network;
in step four, the core network transmits a Relocation Request information to the RNC, wherein, the relocation request information carries the user consent scope indication information of the UE;
in step five, after the RNC receives the relocation request information, the RNC stores the context information of the UE, wherein, the context information includes the user consent scope indication information of the UE, and after the sources are allocated to the UE successfully, the RNC transmits a Relocation Request Acknowledge message to the core network;
in step six, the target core network transmits a Forward Relocation Response message to the source MME;
in step seven, the MME transmits a Handover from EUTRAN Command message to the eNB;
in step eight, the eNB transmits a Handover from EUTRAN Command to the UE to indicate the UE to hand over into the target cell b;
in step nine, the UE transmits a Handover to UTRAN Complete message to the target RNC to successfully complete the handover;
if the target RNC activates the management based MDT, the target RNC may select the UE according to the user consent scope indication information and the MDT measurement configuration, and configures the UE to perform measurement;
if the UE hands over or relocates again at the target eNB and if the new target serving PLMN of the UE is within the user consent scope of the UE, it needs to transfer the user consent scope indication information of the UE; otherwise, the user consent scope indication information will not be transferred.

A person having ordinary skill in the art can understand that all or part of steps in the above method can be implemented by programs instructing related hardware, and the programs can be stored in a computer readable storage medium, such as a read-only memory, disk or disc etc. Alternatively, all or part of steps in the above embodiments can also be implemented by one or more integrated circuits. Accordingly, each module/unit in the above embodiments can be implemented in a form of hardware, or can also be implemented in a form of software functional module. The present invention is not limited to any particular form of a combination of hardware and software.

Of course, the present invention can have a plurality of other embodiments. Those skilled in the art can make various corresponding changes and variations according to the present invention, and all these corresponding changes and variations should belong to the protection scope of the appended claims in the present invention.

### Industrial Applicability

The method proposed according to the embodiments of the present invention not only solves the problem that the access network acquires user consent scope indication information to complete the selection of the UE in multiple PLMN scenarios, but also does not perform transfer for a network without user consent. Therefore, the present invention ensures both the security of the user consent scope indication information and the security of the user privacy. Consequently, the present invention has powerful industrial applicability.

## Claims

1. A method for transmitting Minimization of Drive Test, MDT, related information, **characterized in that,** the method comprises:
in a process of a handover or relocation of a User Equipment, UE, when a source Radio Access Network, RAN, judges that a serving Public Land Mobile Network, PLMN, for a target RAN belongs to PLMNs indicated by user consent scope indication information of the UE, the source RAN directly transmitting the user consent scope indication information of the UE to the target RAN, or transmitting the user consent scope indication information of the UE to the target RAN over a core network, wherein, the user consent scope indication information of the UE is used for indicating the PLMNs of which the UE supports MDT measurement.

2. The method according to claim 1, further comprising:
before the source RAN performs the judgment, the core network transmitting the user consent scope indication information of the UE to the source RAN.

3. The method according to claim 2, further comprising:
before the core network transmits the user consent scope indication information of the UE to the source RAN, the core network judging whether a current serving PLMN of the UE belongs to the PLMNs indicated by the user consent scope indication information of the UE, and if so, transmitting the user consent scope indication information of the UE to the RAN of the UE.

4. The method according to claim 1, further comprising:
the source RAN transmitting the user consent scope indication information of the UE to the target RAN while transmitting management based MDT allowed indication information to the target RAN, wherein, when a content of the management based MDT allowed indication information indicates allowance, a content of the user consent scope indication information is PLMNs of which the UE supports the MDT measurement, and when the content of the management based MDT allowed indication information indicates disallowance, the content of the user consent scope indication information is PLMNs of which the UE does not support the MDT measurement.

5. The method according to claim 1, wherein, the step of the source RAN transmitting the user consent scope indication information of the UE to the target RAN over a core network comprises:
the source RAN transmitting a handover request or a relocation request carrying the user consent scope indication information of the UE to the core network, and after receiving the handover request or the relocation request, the core network transmitting a message carrying the user consent scope indication information of the UE to the target RAN.

6. The method according to any of claims 1-5, wherein,
the user consent scope indication information includes one or more pieces of PLMN information, the PLMN information is PLMN identity, PLMN index or bitmap information.

7. A Radio Access Network, RAN, for transmitting Minimization of Drive Test, MDT, related information, comprising a judgment module and a transmission module when the RAN is used as a source RAN, **characterized in that**,
the judgment module is configured to judge whether a serving Public Land Mobile Network, PLMN, for a target RAN belongs to PLMNs indicated by user consent scope indication information of a User Equipment, UE, in a process of a handover or relocation of the UE, wherein, the user consent scope indication information of the UE is used for indicating PLMNs of which the UE supports MDT measurement; and
the transmission module is configured to directly transmit the user consent scope indication information of the UE to the target RAN or transmit the user consent scope indication information of the UE to the target RAN over a core network when the judgment module judges that the serving PLMN for the target RAN belongs to the PLMNs indicated by the user consent scope indication information of the UE.

8. The RAN according to claim 7, wherein, the transmission module is further configured to:
directly transmit the user consent scope indication information of the UE to the target RAN, or transmit the user consent scope indication information of the UE to the target RAN over the core network while transmitting management based MDT allowed indication information to the target RAN, wherein, when a content of the management based MDT allowed indication information indicates allowance, a content of the user consent scope indication information is PLMNs of which the UE supports the MDT measurement, and when the content of the management based MDT allowed indication information indicates disallowance, the content of the user consent scope indication information is PLMNs of which the UE does not support the MDT measurement.

9. The RAN according to claim 7, wherein, the transmission module is configured to transmit the user consent scope indication information of the UE to the target RAN over the core network by means of:
the transmission module transmitting a handover request or a relocation request carrying the user consent scope indication information of the UE to the core network, and the core network transmitting a message carrying the user consent scope indication information of the UE to the target RAN.

10. The RAN according to any of claims 7-9, wherein,
the user consent scope indication information includes one or more pieces of PLMN information, the PLMN information is PLMN identity, PLMN index or bitmap information.

## Patentansprüche

1. Verfahren zur Übertragung von auf Minimierung von Messfahren (Minimization of Drive Test, MDT) bezogenen Informationen, **dadurch gekennzeichnet, dass** das Verfahren umfasst:
in einem Vorgang einer Weiterreichung oder Verlagerung einer Teilnehmereinrichtung (User Equipment, UE), wenn ein Ausgangs-Funkzugangsnetzwerk (Radio Access Network, RAN) urteilt, dass ein versorgendes öffentliches Landfunknetz (Public Land Mobile Network, PLMN) für ein Ziel-RAN zu den PLMNs gehört, die von Informationen über einen Anwendungsbereich einer Einwilligung des Teilnehmers der UE angezeigt werden, dann überträgt das Ausgangs-RAN direkt die Informationen über den Anwendungsbereich der Einwilligung des Teilnehmers der UE an das Ziel-RAN, oder überträgt die Informationen über den Anwendungsbereich der Einwilligung des Teilnehmers der UE über ein Kern-Netzwerk an das Ziel-RAN, wobei die Informationen über den Anwendungsbereich der Einwilligung des Teilnehmers der UE verwendet werden, um PLMNs anzuzeigen, deren MDT-Messung von der UE unterstützt wird.

2. Verfahren gemäß Anspruch 1, weiterhin umfassend,
dass das Kern-Netzwerk die Informationen über den Anwendungsbereich der Einwilligung des Teilnehmers der UE an das Ausgangs-RAN überträgt, bevor das Ausgangs-RAN die Beurteilung ausführt.

3. Verfahren gemäß Anspruch 2, bei dem weiterhin
bevor das Kern-Netzwerk die Informationen über den Anwendungsbereich der Einwilligung des Teilnehmers der UE an das Ausgangs-RAN überträgt, durch das Kern-Netzwerk beurteilt wird, ob das aktuell versorgende PLMN der UE zu den PLMNs gehört, die von den Informationen über den Anwendungsbereich der Einwilligung des Teilnehmers der UE angezeigt werden, und wenn dieses der Fall ist, dann werden die Informationen über den Anwendungsbereich der Einwilligung des Teilnehmers der UE an das Ziel-RAN der UE übertragen.

4. Verfahren gemäß Anspruch 1, weiterhin umfassend,
dass das Ausgangs-RAN die Informationen über den Anwendungsbereich der Einwilligung des Teilnehmers der UE an das Ziel-RAN überträgt, während es verwaltungsbasierte MDT-Zulassungsanzeigeinformationen an das Ziel-RAN überträgt, wobei, wenn ein Inhalt der verwaltungsbasierten MDT- Zulassungsanzeigeinformationen eine Zulassung anzeigt, dann ist der Inhalt der Informationen über den Anwendungsbereich der Einwilligung des Teilnehmers auf PLMNs bezogen, deren MDT-Messung von der UE unterstützt wird, und wenn der Inhalt der verwaltungsbasierten MDT-Zulassungsanzeigeinformationen eine Nichtzulassung anzeigt, dann ist der Inhalt der Informationen über den Anwendungsbereich der Einwilligung des Teilnehmers auf PLMNs bezogen, deren MDT-Messung von der UE nicht unterstützt wird.

5. Verfahren gemäß Anspruch 1, wobei der Schritt, bei dem das Ausgangs-RAN die Informationen über den Anwendungsbereich der Einwilligung des Teilnehmers der UE über ein Kern-Netzwerk an das Ziel-RAN überträgt, umfasst:
die Ausgangs-RAN überträgt eine Weiterreichungsanfrage oder eine Verlagerungsanfrage, welche die Informationen über den Anwendungsbereich der Einwilligung des Teilnehmers der UE beinhaltet, an das Kern-Netzwerk, und nach dem Empfang der Weiterreichungsanfrage oder der Verlagerungsanfrage überträgt das Kern-Netzwerk eine Mitteilung, welche die Informationen über den Anwendungsbereich der Einwilligung des Teilnehmers der UE beinhaltet, an das Ziel-RAN.

6. Verfahren gemäß einem der Ansprüche 1 bis 5, wobei
die Informationen über den Anwendungsbereich der Einwilligung des Teilnehmers wenigstens eine PLMN-Information beinhalten, wobei die PLMN-Information eine der folgenden ist: PLMN-Identität, PLMN-Index- oder -Bitmap-Informationen.

7. Funkzugangsnetzwerk (Radio Access Network, RAN) zur Übertragung von auf Minimierung von Messfahren (Minimization of Drive Test, MDT) bezogenen Informationen, umfassend ein Beurteilungsmodul und ein Übertragungsmodul, wenn das RAN als ein Ausgangs-RAN verwendet wird, **dadurch gekennzeichnet, dass:**
das Beurteilungsmodul dazu konfiguriert ist, zu beurteilen, ob ein versorgendes öffentliches Landfunknetz (Public Land Mobile Network, PLMN) für ein Ziel-RAN zu den PLMNs gehört, die von den Informationen über einen Anwendungsbereich einer Einwilligung des Teilnehmers einer UE angezeigt werden bei dem Vorgang einer Weiterreichung oder Verlagerung der UE, wobei die Informationen über den Anwendungsbereich der Einwilligung des Teilnehmers der UE verwendet werden, um die PLMNs anzuzeigen, deren MDT-Messung von der UE unterstützt wird; und
das Übertragungsmodul dazu konfiguriert ist, die Informationen über den Anwendungsbereich der Einwilligung des Teilnehmers der UE an das Ziel-RAN direkt zu übertragen, oder die Informationen über den Anwendungsbereich der Einwilligung des Teilnehmers der UE über ein Kern-Netzwerk an das Ziel-RAN zu übertragen, wenn das Beurteilungsmodul urteilt, dass das versorgende PLMN für das Ziel-RAN zu den PLMNs gehört, die von den Informationen über den Anwendungsbereich der Einwilligung des Teilnehmers der UE angezeigt werden.

8. RAN gemäß Anspruch 7, wobei das Übertragungsmodul weiterhin dazu konfiguriert ist:
die Informationen über den Anwendungsbereich der Einwilligung des Teilnehmers der UE an das Ziel-RAN zu übertragen, oder die Informationen über den Anwendungsbereich der Einwilligung des Teilnehmers der UE über das Kern-Netzwerk an das Ziel-RAN zu übertragen, während es verwaltungsbasierte MDT-Zulassungsanzeigeinformationen an das Ziel-RAN überträgt, wobei, wenn ein Inhalt der verwaltungsbasierten MDT- Zulassungsanzeigeinformationen eine Zulassung anzeigt, dann ist der Inhalt der Informationen über den Anwendungsbereich der Einwilligung des Teilnehmers auf PLMNs bezogen, deren MDT-Messung von der UE unterstützt wird, und wenn der Inhalt der verwaltungsbasierten MDT-Zulassungsanzeigeinformationen eine Nichtzulassung anzeigt, dann ist der Inhalt der Informationen über den Anwendungsbereich der Einwilligung des Teilnehmers auf PLMNs bezogen, deren MDT-Messung von der UE nicht unterstützt wird.

9. RAN gemäß Anspruch 7, wobei das Übertragungsmodul dazu konfiguriert ist, die Informationen über den Anwendungsbereich der Einwilligung des Teilnehmers der UE über ein Kern-Netzwerk an das Ziel-RAN zu übertragen, indem:
das Übertragungsmodul eine Weiterreichungsanfrage oder eine Verlagerungsanfrage, welche die Informationen über den Anwendungsbereich der Einwilligung des Teilnehmers der UE beinhaltet, an das Kern-Netzwerk überträgt, und das Kern-Netzwerk eine Mitteilung, welche die Informationen über den Anwendungsbereich der Einwilligung des Teilnehmers der UE beinhaltet, an das Ziel-RAN überträgt.

10. RAN gemäß einem der Ansprüche 7 bis 9, wobei
die Informationen über den Anwendungsbereich der Einwilligung des Teilnehmers wenigstens eine PLMN-Information beinhalten, wobei die PLMN-Information eine der folgenden ist: PLMN-Identität, PLMN-Index- oder -Bitmap-Informationen.

## Revendications

1. Procédé de transmission d'informations relatives à la minimalisation de tests de marche (MDT, minimization of drive test), **caractérisé en ce que** le procédé comprend le fait que :
lors d'un processus de transfert intercellulaire ou translation d'un équipement utilisateur (UE, user equipment), lorsqu'un réseau d'accès radio (RAN, radio access network) source détermine qu'un réseau mobile terrestre public (PLMN, Public Land Mobile Network) de desserte pour un RAN cible appartient à des PLMN indiqués par les informations d'indication de l'étendue du consentement utilisateur de l'UE, le RAN source transmet directement les informations d'indication de l'étendue du consentement utilisateur de l'UE au RAN cible, ou transmet les informations d'indication de l'étendue du consentement utilisateur de l'UE au RAN cible par le biais d'un réseau central, les informations d'indication de l'étendue du consentement utilisateur de l'UE servant à indiquer les PLMN dont l'UE prend en charge la mesure de la MDT.

2. Procédé selon la revendication 1, comprenant en outre le fait que :
avant que le RAN source n'effectue la détermination, le réseau central transmet les informations d'indication de l'étendue du consentement utilisateur de l'UE au RAN source.

3. Procédé selon la revendication 2, comprenant en outre le fait que :
avant que le réseau central ne transmette les informations d'indication de l'étendue du consentement utilisateur de l'UE au RAN source, le réseau central détermine si un PLMN de desserte actuel de l'UE appartient aux PLMN indiqués par les informations d'indication de l'étendue du consentement utilisateur de l'UE et, dans l'affirmative, il transmet les informations d'indication de l'étendue du consentement utilisateur de l'UE au RAN de l'UE.

4. Procédé selon la revendication 1, comprenant en outre le fait que :
le RAN source transmet les informations d'indication de l'étendue du consentement utilisateur de l'UE au RAN cible tout en transmettant des informations d'indication d'autorisation de MDT à base gestionnelle au RAN cible, où, lorsque la teneur des informations d'indication d'autorisation de MDT à base gestionnelle indique une autorisation, la teneur des informations d'indication de l'étendue du consentement utilisateur est relative aux PLMN dont l'UE prend en charge la mesure de la MDT, et lorsque la teneur des informations d'indication d'autorisation de MDT à base gestionnelle indique une non-autorisation, la teneur des informations d'indication de l'étendue du consentement utilisateur est relative aux PLMN dont l'UE ne prend pas en charge la mesure de la MDT.

5. Procédé selon la revendication 1, dans lequel l'étape pendant laquelle le RAN source transmet les informations d'indication de l'étendue du consentement utilisateur de l'UE au RAN cible par le biais d'un réseau central comprend le fait que :
le RAN source transmet une requête de transfert intercellulaire ou une requête de translation, porteuse des informations d'indication de l'étendue du consentement utilisateur de l'UE, au réseau central, et après avoir reçu la requête de transfert intercellulaire ou la requête de translation, le réseau central transmet un message porteur des informations d'indication de l'étendue du consentement utilisateur de l'UE au RAN cible.

6. Procédé selon l'une quelconque des revendications 1 à 5, dans lequel
les informations d'indication de l'étendue du consentement utilisateur comportent une ou plusieurs informations concernant le PLMN, les informations concernant le PLMN étant relatives à l'identité du PLMN ou des informations d'index ou de matrice du PLMN.

7. Réseau d'accès radio (RAN, radio access network) de transmission d'informations relatives à la minimalisation de tests de marche (MDT, minimization of drive test), comprenant un module de détermination et un module de transmission lorsque le RAN sert de RAN source, **caractérisé en ce que :**
le module de détermination est configuré pour déterminer si un réseau mobile terrestre public (PLMN, Public Land Mobile Network) de desserte pour un RAN cible appartient à des PLMN indiqués par les informations d'indication de l'étendue du consentement utilisateur d'un équipement utilisateur (UE, user equipment) lors d'un processus de transfert intercellulaire ou translation de l'UE, les informations d'indication de l'étendue du consentement utilisateur de l'UE servant à indiquer les PLMN dont l'UE prend en charge la mesure de la MDT ; et
le module de transmission est configuré pour transmettre directement les informations d'indication de l'étendue du consentement utilisateur de l'UE au RAN cible ou pour transmettre les informations d'indication de l'étendue du consentement utilisateur de l'UE au RAN cible par le biais d'un réseau central lorsque le module de détermination détermine que le PLMN de desserte pour le RAN cible appartient aux PLMN indiqués par les informations d'indication de l'étendue du consentement utilisateur de l'UE.

8. RAN selon la revendication 7, dans lequel le module de transmission est configuré en outre pour :
transmettre directement les informations d'indication de l'étendue du consentement utilisateur de l'UE au RAN cible, ou transmettre les informations d'indication de l'étendue du consentement utilisateur de l'UE au RAN cible par le biais du réseau central tout en transmettant des informations d'indication d'autorisation de MDT à base gestionnelle au RAN cible, où, lorsque la teneur des informations d'indication d'autorisation de MDT à base gestionnelle indique une autorisation, la teneur des informations d'indication de l'étendue du consentement utilisateur est relative aux PLMN dont l'UE prend en charge la mesure de la MDT, et lorsque la teneur des informations d'indication d'autorisation de MDT à base gestionnelle indique une non-autorisation, la teneur des informations d'indication de l'étendue du consentement utilisateur est relative aux PLMN dont l'UE ne prend pas en charge la mesure de la MDT.

9. RAN selon la revendication 7, dans lequel le module de transmission est configuré pour transmettre les informations d'indication de l'étendue du consentement utilisateur de l'UE au RAN cible par le biais du réseau central :
au moyen du module de transmission qui transmet une requête de transfert intercellulaire ou une requête de translation porteuse des informations d'indication de l'étendue du consentement utilisateur de l'UE au réseau central, et au moyen du réseau central qui transmet un message porteur des informations d'indication de l'étendue du consentement utilisateur de l'UE au RAN cible.

10. RAN selon l'une quelconque des revendications 7 à 9, dans lequel
les informations d'indication de l'étendue du consentement utilisateur comportent une ou plusieurs informations concernant le PLMN, les informations concernant le PLMN étant relatives à l'identité du PLMN ou des informations d'index ou de matrice du PLMN.
